# EUROPEAN PATENT APPLICATION

(11) **EP 4 753 135 A1**
(43) Date of publication of application: **03.06.2026**
(21) Application number: 25163887.0
(22) Date of filing: 14.03.2025
(51) Int. Cl.: H02M 5/44, H02M 5/458, H02M 3/335, H02M 1/00, H02M 3/158, H02M 7/483

(54) **POWER CONVERSION APPARATUS AND POWER CONVERSION SYSTEM**

(30) Priority: 02.12.2024 CN 202411749242
(71) Applicant: DELTA ELECTRONICS, INC., Taoyuan City 320023 (TW)
(72) Inventor: LI, Sheng-Hua, 320023 Taoyuan City (TW)
(74) Representative: 2K Patent Partnerschaft mbB

(57) **Abstract**

A power conversion apparatus (10, 10-1, 10-2, 10-3) includes a plurality of three-phase power modules (11-1N), a switch matrix (20), and a controller (30). Each three-phase power module (11-1N) includes three single-phase AC-to-DC conversion units (111, 112, 113) respectively receiving three AC voltages (V_{R}, V_{S}, V_{T}) of a three-phase AC power supply (V_{AC3}), and converting the three AC voltages (V_{R}, V_{S}, V_{T}) to provide a plurality of DC currents (i_{dc1}, i_{dc2}, i_{dc3}, ..., i_{dcN}). The switch matrix (20) receives the DC currents (i_{dc1}, i_{dc2}, i_{dc3}, ..., i_{dcN}) provided from the three-phase power modules (11-1N). The controller (30) provides a switch control signal to control the switch matrix (20) to decide an output power provided by the DC currents (i_{dc1}, i_{dc2}, i_{dc3}, ..., i_{dcN}).

## Description

### BACKGROUND

### Technical Field

The present disclosure relates to a power conversion apparatus and a power conversion system, and more particularly to a power conversion apparatus and a power conversion system with a function of low-frequency ripple current cancellation.

### Description of Related Art

The statements in this section merely provide background information related to the present disclosure and do not necessarily constitute prior art.

With the growing awareness of environmental protection and green energy, the sales of electric vehicles are doubling and the demand for the construction of charging stations is increasing. The ability to respond to the charging needs of electric vehicles, especially those with extremely light loads, and to provide a balance between overall power efficiency and charging quality is indeed the goal of the joint efforts of technicians in this field.

Therefore, how to design a power conversion apparatus and a power conversion system to solve the problems and technical bottlenecks in the existing technology has become a critical topic in this field.

### SUMMARY

An objective of the present disclosure is to provide a power conversion apparatus. The power conversion apparatus includes a plurality of three-phase power modules, a switch matrix, and a controller. Each three-phase power module includes three single-phase AC-to-DC conversion units. The three single-phase AC-to-DC conversion units respectively receive three AC voltages of a three-phase AC power supply, and convert the three AC voltages to provide a plurality of DC currents. The switch matrix receives the DC currents provided from the three-phase power modules. The controller provides a switch control signal to control the switch matrix to decide an output power provided by the DC currents.

Accordingly, the power conversion apparatus in the present disclosure has the following features and advantages: 1. under the light load power demand, by disabling the three-phase power module(s) to reduce the power supply of the power conversion apparatus in response to the reduction of load power demand so that the power conversion apparatus can output a balanced three-phase current to cancel the ripple current; 2. under the light load power demand, by interleavedly disabling the single-phase AC-to-DC conversion units to reduce the power supply of the power conversion apparatus in response to the reduction of load power demand so that the power conversion apparatus can output a balanced three-phase current to cancel the ripple current, and at the same time, the three-phase power supply on the grid side will not have the problem of uneven load extraction, thereby maintaining the power supply balance on the grid side; 3. by using the simple circuit design, the control of the low-frequency ripple current cancellation circuit is realized so that the system efficiency can be maintained even under extremely light load power demand, and the ripple component of the DC current can be cancelled so that the output current flowing to the load is a DC current without ripple components.

Another objective of the present disclosure is to provide a power conversion system. The power conversion system includes a plurality of power conversion apparatuses and a system controller. Each power conversion apparatus includes a plurality of three-phase power modules, a switch matrix, and a controller. Each three-phase power module includes three single-phase AC-to-DC conversion units. The three single-phase AC-to-DC conversion units respectively receive three AC voltages of a three-phase AC power supply, and convert the three AC voltages into a plurality of DC currents. The switch matrix receives the DC currents provided from the three-phase power modules. The controller provides a switch control signal to control the switch matrix to decide an output power provided by the DC currents. The system controller is connected to the controllers of the power conversion apparatuses, and the system controller controls the controllers through communication to control the power conversion apparatuses to output balanced output powers.

Accordingly, the power conversion system in the present disclosure has the following features and advantages: 1. under the light load power demand, by disabling the three-phase power module(s) to reduce the power supply of the power conversion apparatus in response to the reduction of load power demand so that the power conversion apparatus can output a balanced three-phase current to cancel the ripple current; 2. under the light load power demand, by interleavedly disabling the single-phase AC-to-DC conversion units to reduce the power supply of the power conversion apparatus in response to the reduction of load power demand so that the power conversion apparatus can output a balanced three-phase current to cancel the ripple current, and at the same time, the three-phase power supply on the grid side will not have the problem of uneven load extraction, thereby maintaining the power supply balance on the grid side; 3. by using the simple circuit design, the control of the low-frequency ripple current cancellation circuit is realized so that the system efficiency can be maintained even under extremely light load power demand, and the ripple component of the DC current can be cancelled so that the output current flowing to the load is a DC current without ripple components; 4. multiple power conversion apparatuses are integrated and controlling through the system controller to achieve balanced output current in the cross-cabinet application field to maintain power supply balance on the grid side.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a block diagram of a power conversion apparatus according to a first embodiment of the present disclosure.
FIG. 2 is a block diagram of a three-phase power module of the power conversion apparatus according to the present disclosure.
FIG. 3 is a block diagram of the power conversion apparatus according to a second embodiment of the present disclosure.
FIG. 4 is a schematic diagram of disabling one three-phase power module of the power conversion apparatus according to the present disclosure.
FIG. 5 is a schematic diagram of disabling one single-phase AC-to-DC conversion unit of each three-phase power module of the power conversion apparatus according to the present disclosure.
FIG. 6 is a circuit diagram of a low-frequency ripple current cancellation circuit of the power conversion apparatus according to the present disclosure.
FIG. 7 is a block diagram of a power conversion system according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

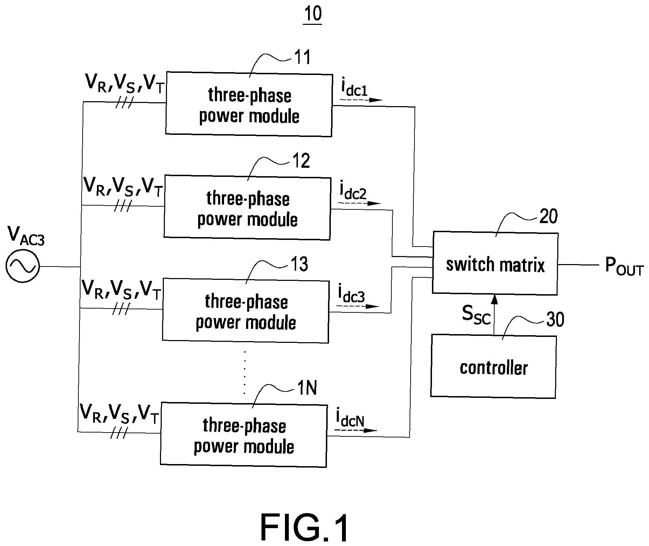

Please refer to FIG. 1, which shows a block diagram of a power conversion apparatus according to a first embodiment of the present disclosure. In this embodiment, the power conversion apparatus 10 includes a plurality of three-phase power modules 11, 12, 13, ..., 1N, a switch matrix 20, and a controller 30. Specifically, the three-phase power modules 11, 12, 13, ..., 1N include a first three-phase power module 11, a second three-phase power module 12, a third three-phase power module 13, ..., and a Nth three-phase power module 1N.

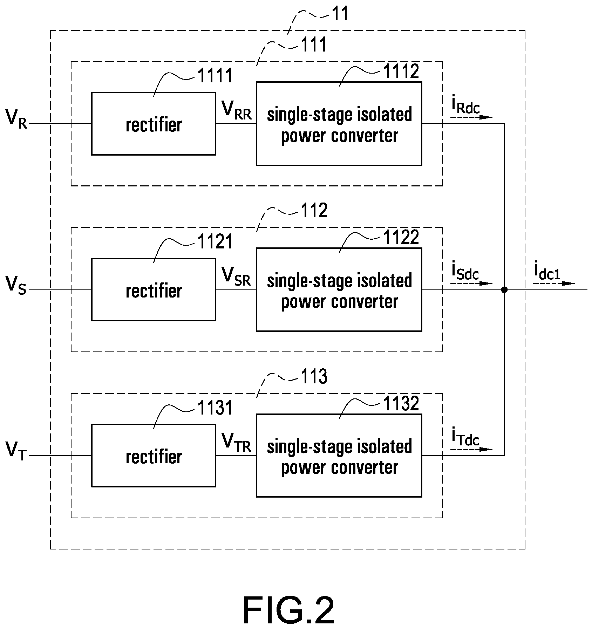

Each three-phase power module 11, 12, 13, ..., 1N includes three single-phase AC-to-DC conversion units 111, 112, 113 (shown in FIG. 2, and details will be explained later) respectively receiving three AC voltages V_{R}, V_{S}, V_{T} of a three-phase AC power supply V_{AC3}, and converting the three AC voltages to provide a plurality of DC currents i_{dc1}, i_{dc2}, i_{dc3}, ..., i_{dcN}. In this embodiment, each single-phase AC-to-DC conversion unit 111, 112, 113 is a resonant AC-to-DC conversion unit, for example, but not limited to, an LLC AC-to-DC conversion unit. Specifically, the first three-phase power module 11 receives the three AC voltages V_{R}, V_{S}, V_{T} of the three-phase AC power supply V_{AC3}, and converts the three AC voltages V_{R}, V_{S}, V_{T} to provide a first DC current i_{dc1}. Similarly, the second three-phase power module 12 receives the three AC voltages V_{R}, V_{S}, V_{T} of the three-phase AC power supply V_{AC3}, and converts the three AC voltages V_{R}, V_{S}, V_{T} to provide a second DC current i_{dc2}. Similarly, the third three-phase power module 13 receives the three AC voltages V_{R}, V_{S}, V_{T} of the three-phase AC power supply V_{AC3}, and converts the three AC voltages V_{R}, V_{S}, V_{T} to provide a third DC current i_{dc3}. Similarly, the Nth three-phase power module 1N receives the three AC voltages V_{R}, V_{S}, V_{T} of the three-phase AC power supply V_{AC3}, and converts the three AC voltages V_{R}, V_{S}, V_{T} to provide a Nth DC current i_{dcN}.

The switch matrix 20 receives the DC currents i_{dc1}, i_{dc2}, i_{dc3}, ..., i_{dcN} provided from the three-phase power modules 11, 12, 13, ..., 1N. Specifically, the switch matrix 20 receives the first DC current i_{dc1} provided from the first three-phase power module 11, receives second DC current i_{dc2} provided from the second three-phase power module 12, receives the third DC current i_{dc3} provided from the third three-phase power module 13, and similarly receives the Nth DC current i_{dcN} provided from the Nth three-phase power module 1N. In the present disclosure, the switch matrix 20 is a device that can dynamically connect different power paths and is commonly used in various electronic systems, especially in applications that require flexible path selection. The basic structure of the switch matrix 20 usually includes multiple input channels and output channels, and the conduction paths of the input channels and output channels are determined through switching elements and corresponding control signals.

The controller 30 provides a switch control signal S_{SC} to control the switch matrix to decide an output power P_{OUT} provided by the DC currents i_{dc1}, i_{dc2}, i_{dc3}, ..., i_{dcN}. Specifically, the controller 30 turns on or turns off input channels and output channels of the switch matrix 20 through the switch control signal Ssc to determine the output of the DC currents i_{dc1}, i_{dc2}, i_{dc3}, ..., i_{dcN}. For example, if the switch control signal S_{SC} controls the switch matrix 20 to connect the input channels and the output channels of the second DC current i_{dc2} to the Nth DC current i_{dcN}, and disconnect the input channel and the output channel of the first DC current i_{dc1}, the output of the first DC current i_{dc1} is disconnected, and the outputs of the second DC current i_{dc2} to the Nth DC current i_{dcN} are connected so that the output power P_{OUT} can be determined by the second DC current i_{dc2} to the Nth DC current i_{dcN}, regardless of the first DC current i_{dc1}.

Please refer to FIG. 2, which shows a block diagram of a three-phase power module of the power conversion apparatus according to the present disclosure. As mentioned above, each three-phase power module 11, 12, 13, ..., 1N includes three single-phase AC-to-DC conversion units 111, 112, 113. Taking the first three-phase power module 11 shown in FIG. 2 as an example. The first three-phase power module 11 includes a first single-phase AC-to-DC conversion unit 111, a second single-phase AC-to-DC conversion unit 112, and a third single-phase AC-to-DC conversion unit 113. Each single-phase AC-to-DC conversion unit 111, 112, 113 includes a rectifier 1111, 1121, 1131 and a single-stage isolated power converter 1112, 1122, 1132. The rectifier 1111, 1121, 1131 receives one AC voltage V_{R}, V_{S}, V_{T} of the three-phase AC power supply V_{AC3}, and rectifies the AC voltage V_{R}, V_{S}, V_{T} into a rectified voltage V_{RR}, V_{SR}, V_{TR}. The single-stage isolated power converter 1112, 1122, 1132 receives the rectified voltage V_{RR}, V_{SR}, V_{TR}, and converts the rectified voltage V_{RR}, V_{SR}, V_{TR} into a conversion current i_{Rdc}, i_{Sdc}, i_{Tdc}. In particular, the sum of the conversion currents i_{Rdc}, i_{Sdc}, i_{Tdc} of the single-phase AC-to-DC conversion units 111, 112, 113 is the DC current i_{dc1}, i_{dc2}, i_{dc3}, ..., i_{dcN}.

Specifically, as shown in FIG. 2, the first single-phase AC-to-DC conversion unit 111 includes a first rectifier 1111 and a first single-stage isolated power converter 1112; the second single-phase AC-to-DC conversion unit 112 includes a second rectifier 1121 and a second single-stage isolated power converter 1122; the third single-phase AC-to-DC conversion unit 113 includes a third rectifier 1131 and a third single-stage isolated power converter 1132. The first rectifier 1111 receives an R-phase AC voltage V_{R} of the three-phase AC power supply V_{AC3}, and the rectifies the R-phase AC voltage V_{R} into a first rectified voltage V_{RR}. The first single-stage isolated power converter 1112 receives the first rectified voltage V_{RR}, and converts the first rectified voltage V_{RR} into a first conversion current i_{Rdc}. Similarly, the second rectifier 1121 receives an S-phase AC voltage V_{S} of the three-phase AC power supply V_{AC3}, and the rectifies the S-phase AC voltage V_{S} into a second rectified voltage V_{SR}. The second single-stage isolated power converter 1122 receives the second rectified voltage V_{SR}, and converts the second rectified voltage V_{SR} into a second conversion current i_{Sdc}. Similarly, the third rectifier 1131 receives a T-phase AC voltage V_{T} of the three-phase AC power supply V_{AC3}, and the rectifies the T-phase AC voltage V_{T} into a third rectified voltage V_{TR}. The third single-stage isolated power converter 1132 receives the third rectified voltage V_{TR}, and converts the third rectified voltage V_{TR} into a third conversion current i_{Tdc}. Furthermore, the sum of the first conversion current i_{Rdc}, the second conversion current i_{Sdc}, and the third conversion current i_{Tdc} is the first DC current i_{dc1}. Accordingly, the second three-phase power module 12, the third three-phase power module 13, and similarly the Nth three-phase power module 1N are also applicable, and will not be repeated here.

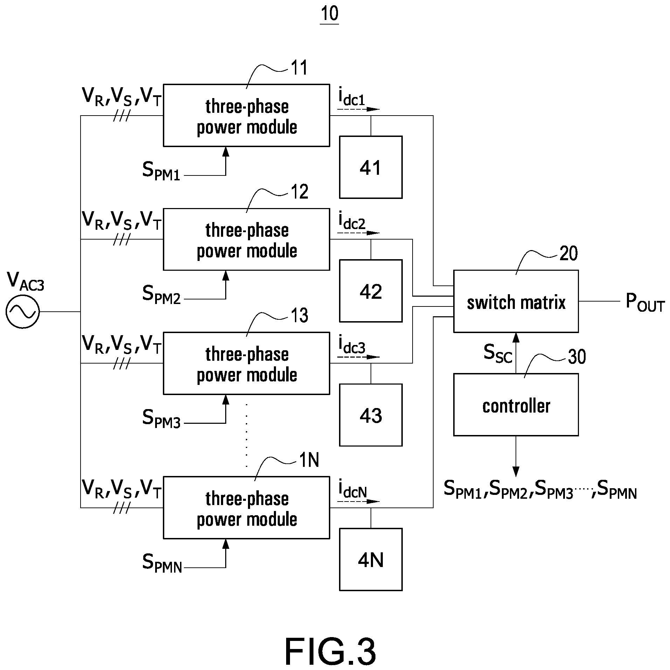

Please refer to FIG. 3, which shows a block diagram of the power conversion apparatus according to a second embodiment of the present disclosure. Compared with the first embodiment shown in FIG. 1, the second embodiment shown in FIG. 3 further includes a plurality of low-frequency ripple current suppression circuits 41, 42, ..., 4N. In particular, the number of the low-frequency ripple current cancellation circuits is equal to the number of the three-phase power modules 11, 12, 13, ..., 1N, and each low-frequency ripple current cancellation circuit 41, 42, ..., 4N is correspondingly connected an output side of each three-phase power module 11, 12, 13, ..., 1N. Specifically, the low-frequency ripple current cancellation circuits 41, 42, ..., 4N include a first low-frequency ripple current cancellation circuit 41, a second low-frequency ripple current cancellation circuit 42, a third low-frequency ripple current cancellation circuit 43, and similarly a Nth low-frequency ripple current cancellation circuit 4N. The first low-frequency ripple current cancellation circuit 41 is connected to an output side of the first three-phase power module 11; the second low-frequency ripple current cancellation circuit 42 is connected to an output side of the second three-phase power module 12; the third low-frequency ripple current cancellation circuit 43 is connected to an output side of the third three-phase power module 13; similarly, the Nth low-frequency ripple current cancellation circuit 4N is connected to an output side of the Nth three-phase power module 1N.

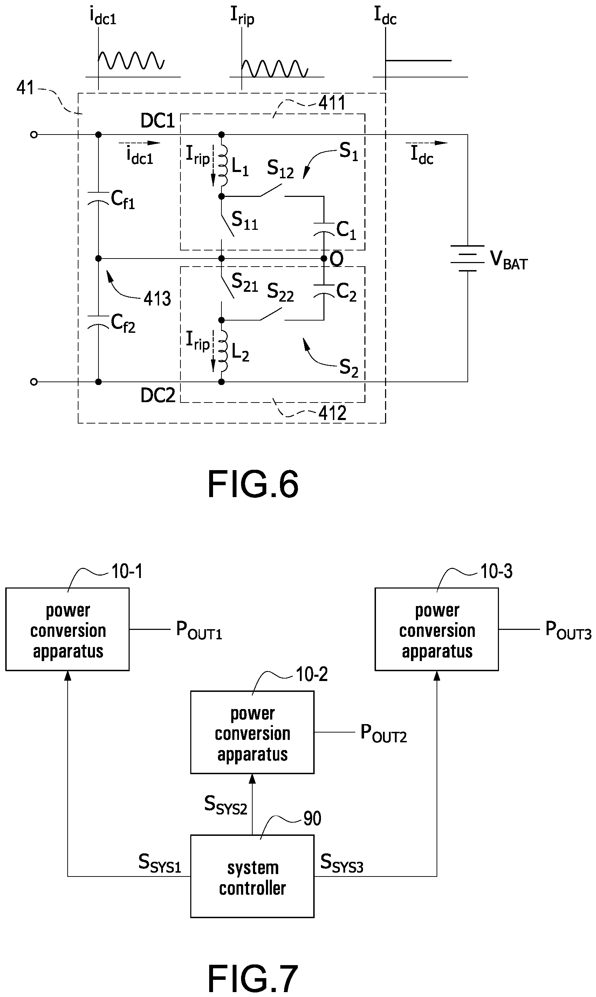

Please refer to FIG. 6, which shows a circuit diagram of a low-frequency ripple current cancellation circuit of the power conversion apparatus according to the present disclosure. As shown in FIG. 6, taking the first low-frequency ripple current cancellation circuit 41 as an example. The first low-frequency ripple current cancellation circuit 41 includes a first step-up circuit 411 and a second step-up circuit 412. The second step-up circuit 412 is connected to the first step-up circuit 411. The first low-frequency ripple current cancellation circuit 41 receives a first DC current i_{dc1} with a ripple component Iᵣᵢₚ, and the ripple component Iᵣᵢₚ is cancelled by the first step-up circuit 411 and the second step-up circuit 412. Therefore, the above-mentioned circuit design of the first low-frequency ripple current cancellation circuit 41 can cancel the ripple component Iᵣᵢₚ of the first DC current i_{qc1}.

The first step-up circuit 411 includes a first inductor L₁, a first switch assembly S₁, and a first capacitor C₁. The first inductor L₁ has a first terminal and a second terminal, and the first terminal of the first inductor L₁ is connected to a first DC side DC1. The first switch assembly S₁ includes a first switch S₁₁ and a second switch S₁₂. The first switch S₁₁ has a first terminal and a second terminal, the first terminal of the first switch S₁₁ is connected to the second terminal of the first inductor L₁, and the second terminal of the first switch S₁₁ is connected to an equal-potential node O. The second switch S₁₂ has a first terminal and a second terminal, the first terminal of the second switch S₁₂ is connected to the second terminal of the first inductor L₁. The first capacitor C₁ has a first terminal and a second terminal. The first terminal of the first capacitor C₁ is connected to the second terminal of the second switch S₁₂, and the second terminal of the first capacitor C₁ is connected to the equal-potential node O. In addition, the circuit structure of the second step-up circuit 412 is similar to that of the first step-up circuit 411, so no details will be described here.

Please refer to FIG. 6 again, the first low-frequency ripple current cancellation circuit 41 further includes a filter circuit 413. The filter circuit 413 includes a first filter capacitor C_{f1} and a second filter capacitor C_{f2}. The first filter capacitor C_{f1} has a first terminal and a second terminal. The first terminal of the first filter capacitor C_{f1} is connected to the first DC side DC1, and the second terminal of the first filter capacitor C_{f1} is connected to the equal-potential node O. The second filter capacitor C_{f2} has a first terminal and a second terminal. The first terminal of the second filter capacitor C_{f2} is connected to a second DC side DC2, and the second terminal of the second filter capacitor C_{f2} is connected to the equal-potential node O.

As mentioned above, in order to cancel the ripple component Iᵣᵢₚ of the first DC current i_{dc1}, the first switch assembly S₁ of the first step-up circuit 411 and the second switch assembly S₂ of the second step-up circuit 412 are controlled as follows. Incidentally, the first switch S₁₁ and the second switch S₁₂ of the first switch assembly S₁ and the third switch S₂₁ and the fourth switch S₂₂ of the second switch assembly S₂ may be controlled by a controller or a control unit. Therefore, the controller or control unit is not shown separately in the drawings and will be explained first.

In particular, the control signals, which are generated from the controller (such as the controller 30 shown in FIG. 1 or another controller) of controlling the first switch S₁₁ and the second switch S₁₂ of the first switch assembly S₁ are synchronously complementary turned on and turned off. In addition, the control signals, which are generated from the controller, of controlling the third switch S₂₁ and the fourth switch S₂₂ of the second switch assembly S₂ are synchronously complementary turned on and turned off.

In one embodiment, the first switch S₁₁ of the first switch assembly S₁ and the third switch S₂₁ of the second switch assembly S₂ are synchronously turned on and turned off. In another embodiment, the first switch S₁₁ of the first switch assembly S₁ and the third switch S₂₁ of the second switch assembly S₂ are asynchronously turned on and turned off.

The specific operation of the first low-frequency ripple current cancellation circuit 41 is described as follows. The first DC current i_{dc1} of the output side of the first three-phase power module 11 flows into the first DC side DC1, and is high-frequency filtered by the filter circuit 413, and the filtered DC current i_{dc1} flows into the first step-up circuit 411 and the second step-up circuit 412. As explained above, by turning on the first switch S₁₁ of the first switch assembly S₁ and turning off the second switch S₁₂, the first DC current i_{dc1} flowing into the first step-up circuit 411 and the second step-up circuit 412 so that the ripple component Iᵣᵢₚ is stored in the first inductor L₁ through the first switch S₁₁. Afterward, by turning off the first switch S₁₁ of the first switch assembly S₁ and turning on the second switch S₁₂ so that the energy stored in the first inductor L₁ is released to the first capacitor C₁ through the second switch S₁₂.

Similarly, by turning on the third switch S₂₁ of the second switch assembly S₂ and turning off the second switch S₂₂, the ripple component Iᵣᵢₚ is stored in a second inductor L₂ through the third switch S₂₁. Afterward, by turning off the third switch S₂₁ of the second switch assembly S₂ and turning on the fourth switch S₂₂ so that the energy stored in the second inductor L₂ is released to a second capacitor C₂ through the fourth switch S₂₂. Accordingly, the ripple component Iᵣᵢₚ of the first DC current i_{dc1} can be absorbed through the first step-up circuit 411 and the second step-up circuit 412 so that the output current I_{dc} flowing to the load is the DC current without the ripple component Iᵣᵢₚ.

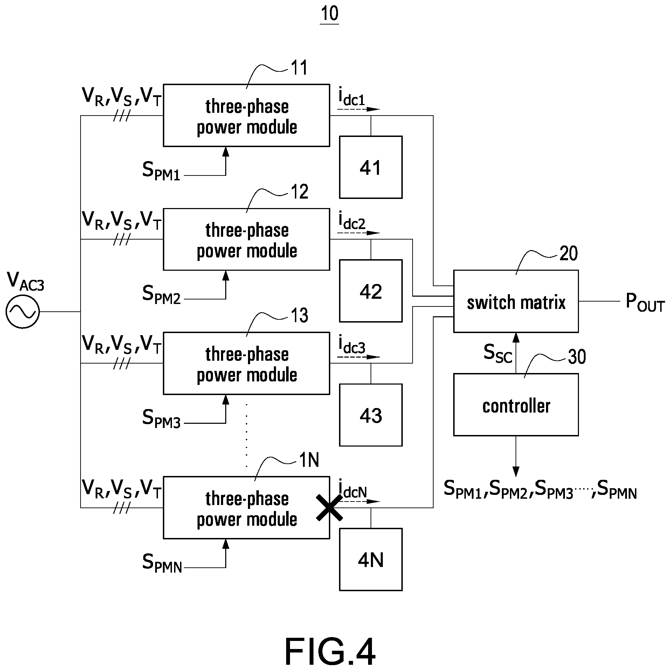

In addition, for operations of reduction in the load power demand, it can be achieved by disabling the three-phase power module 11, 12, 13, ..., 1N. In particular, the load may be the battery V_{BAT} of an electric vehicle as an example (as shown in FIG. 6). Please refer to FIG. 4, which shows a schematic diagram of disabling one three-phase power module of the power conversion apparatus according to the present disclosure. Specifically, as shown in FIG. 4, according to the load power demand supplied by the power conversion apparatus 10 (taking an electric vehicle as the load as an example), the controller 30 can receive the charging information required by the electric vehicle. The controller 30 provides at least one module control signal S_{PM1}, S_{PM2}, S_{PM3}, ..., S_{PMN} to disable at least one three-phase power module 11, 12, 13, ..., 1N. As shown in FIG. 4, when the load power demand decreases, the module control signal S_{PMN} provided by the controller 30 turns off (disables) the power supply of the Nth three-phase power module 1N, and only uses three-phase power modules other than the Nth three-phase power module 1N for power-supplying operation. Furthermore, when the load power demand further decreases, other three-phase power modules for power-suppling operation can be further turned off. Therefore, the number of three-phase power modules 11, 12, 13, ..., 1N for power-supply operation can be controlled according to the load power demand.

Moreover, in response to the reduction in load power demand, in addition to disabling the power supply of the three-phase power module mentioned above, at least one single-phase AC-to-DC conversion unit 111, 112, 113 of the three-phase power modules 11, 12, 13 can also be disabled. Specifically, according to the load power demand supplied by the power conversion apparatus 10, the controller 30 provides at least one module control signal S_{PM1}, S_{PM2}, S_{PM3}, ..., S_{PMN} to disable at least one single-phase AC-to-DC conversion unit 111, 112, 113 of the three-phase power module 11, 12, 13, ..., 1N. Incidentally, the module control signals S_{PM1}, S_{PM2}, S_{PM3}, ..., S_{PMN} can not only control enabling and disabling the single three-phase power module 11, 12, 13, ..., 1N, but can also further control enabling and disabling the single single-phase AC-to-DC conversion unit 111, 112, 113 of the three-phase power module 11, 12, 13, ..., 1N. For convenience of explanation, only the module control signals S_{PM1}, S_{PM2}, S_{PM3}, ..., S_{PMN} are illustrated.

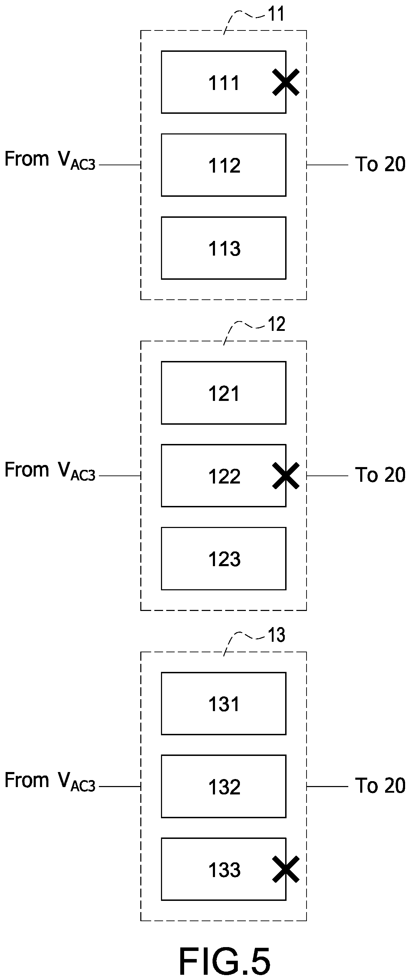

For example, take the example shown in FIG. 5, which shows a schematic diagram of disabling one single-phase AC-to-DC conversion unit of each three-phase power module of the power conversion apparatus according to the present disclosure. When the load power demand decreases, the module control signal S_{PM1} provided by the controller 30 turns off (disables) the first single-phase AC-to-DC conversion unit 111 of the first three-phase power module 11, the module control signal S_{PM2} turns off (disables) the second single-phase AC-to-DC conversion unit 122 of the second three-phase power module 12, and the module control signal S_{PM3} turns off (disables) the third single-phase AC-to-DC conversion unit 133 of the third three-phase power module 13. In this embodiment, the controller 30 disables one single-phase AC-to-DC conversion unit 111, 122, 133 in the three different three-phase power modules 11, 12, 13, that is, the disabled (turned off) single-phase AC-to-DC conversion units 111, 122, 133 interleavedly receive three AC voltages. Specifically, the disabled single-phase AC-to-DC conversion unit 111 receives the R-phase AC voltage, the disabled single-phase AC-to-DC conversion unit 122 receives the S-phase AC voltage, and the disabled single-phase AC-to-DC conversion unit 133 receives the T-phase AC voltage so as to maintain the single-phase AC-to-DC conversion units that are not disabled (turned off) to receive the same number and configuration of three-phase AC voltages. In other words, the non-disabled single-phase AC-to-DC conversion units 121, 131 receive the R-phase AC voltage, the non-disabled single-phase AC-to-DC conversion units 112, 132 receive the S-phase AC voltage, and the non-disabled single-phase AC-to-DC conversion units 113, 123 receive the T-phase AC voltage so that the power conversion apparatus 10 can output a balanced three-phase current to cancel the ripple current (i.e., the ripple component of the DC current).

Furthermore, when the load power demand further decreases, other single-phase AC-to-DC conversion units for power-suppling operation can be further turned off. For example, the controller 30 disables the first single-phase AC-to-DC conversion unit 111 and the second single-phase AC-to-DC conversion unit 112 of the first three-phase power module 11, that is, the non-disabled single-phase AC-to-DC conversion unit 113 is connected to the T-phase AC voltage, disables the second single-phase AC-to-DC conversion unit 122 and the third single-phase AC-to-DC conversion unit 123 of the second three-phase power module 12, that is, the non-disabled single-phase AC-to-DC conversion unit 121 is connected to the R-phase AC voltage, and disables the third single-phase AC-to-DC conversion unit 133 and the first single-phase AC-to-DC conversion unit 131 of the third three-phase power module 13, that is, the non-disabled single-phase AC-to-DC conversion unit 132 is connected to the S-phase AC voltage. Accordingly, it is also to reduce the power supply of the power conversion apparatus 10 in response to a reduction in load power demand so that the power conversion apparatus 10 can output a balanced three-phase current to cancel the ripple current (i.e., the ripple component of the DC current).

Furthermore, when the load power demand further decreases, i.e., extremely light load power demand, if it is not possible to maintain the non-disabled single-phase AC-to-DC conversion units to receive the same number and configuration of three-phase AC voltages, for example, when the three single-phase AC-to-DC conversion units 111, 112, 113 of the first three-phase power module 11 are all disabled, only two single-phase AC-to-DC conversion units 122, 123 of the second three-phase power module 12 are disabled, and only two single-phase AC-to-DC conversion units 133, 131 of the third three-phase power module 13 are disabled, due to the asymmetric (unbalanced) three-phase power supply (as mentioned above, the asymmetric power supply caused by the reduction of the T-phase voltage output), the DC output terminal contains AC components above twice the line frequency harmonic, and the DC (output) current i_{dc} produces ripple components, which will affect the quality of power supply to the load and even the service life of the load. Therefore, it is necessary to cancel the ripple component Iᵣᵢₚ of the DC currents i_{dc1}-i_{dc3} by controlling and adjusting the low-frequency ripple current cancellation circuits 42, 43.

Moreover, if the load power demand is as low as that it only needs to be supplied by one single-phase AC-to-DC conversion units 132 of the third three-phase power module 13, the DC current ripple component caused by unbalanced three-phase power supply can be cancelled by controlling and adjusting the low-frequency ripple current cancellation circuit 43 corresponding to the third three-phase power module 13.

Therefore, even if the load power demand needs to be further reduced, larger ripple components can be fully suppressed.

Moreover, in response to the reduction in load power demand, in addition to disabling the power supply of the three-phase power module or disabling the power supply of the at least one single-phase AC-to-DC conversion unit of the three-phase power module mentioned above, both disabling the power supply of the three-phase power module and the at least one single-phase AC-to-DC conversion unit. Specifically, according to the load power demand supplied by the power conversion apparatus 10, the controller 30 provides at least one module control signal S_{PM1}, S_{PM2}, S_{PM3}, ..., S_{PMN} to disable at least one three-phase power module 11, 12, 13, ..., 1N, and disable at least one single-phase AC-to-DC conversion unit 111, 112, 113 of the three-phase power module 11, 12, 13, ..., 1N. As for the operation of combining the two disabling manners, please refer to the previous disclosure and will not be described again. As long as the power supply of the power conversion apparatus 10 can be reduced in response to the reduction of the load power demand, and the power conversion apparatus 10 can output a balanced three-phase current to cancel the ripple current, it should be included in the scope of the present disclosure.

Please refer to FIG. 7, which shows a block diagram of a power conversion system according to the present disclosure. The power conversion system includes a plurality of power conversion apparatuses 10-1, 10-2, 10-3 and a system controller 90. As shown in FIG. 7, three power conversion apparatuses 10-1, 10-2, 10-3 are used as examples for illustration, but this does not limit the present disclosure. Specifically, three power conversion apparatuses 10-1, 10-2, 10-3 include a first power conversion apparatus 10-1, a second power conversion apparatus 10-2, and a third power conversion apparatus 10-3. Incidentally, the circuit structure and control manner of each power conversion apparatus 10-1, 10-2, 10-3 shown in FIG. 7 are the same as the power conversion apparatus 10 shown in FIG. 1. In other words, if the power conversion apparatus 10 in FIG. 1 is one set of cabinet, FIG. 7 shows that the field of use includes three sets of cabinets, that is, the multi-set cabinet structure shown in FIG. 7 can perform cross-cabinet operations.

As for the specific circuit structure of each power conversion apparatus 10-1, 10-2, 10-3, please refer to the above-mentioned disclosure, and will not be repeated here. The system controller 90 is connected to the controllers 30 of the power conversion apparatuses 10-1, 10-2, 10-3, and the controllers 30 are controlled through communication to control the corresponding power conversion apparatuses 10-1, 10-2, 10-3 to output balanced output powers P_{OUT1}, P_{OUT2}, P_{OUT3}. Specifically, the system controller 90 is responsible for the control and communication of all power conversion apparatuses in the field so that the output powers P_{OUT1}, P_{OUT2}, P_{OUT3} output by the power conversion apparatuses 10-1, 10-2, 10-3 can be reduced in response to the load power demand to reduce the power supply of the power conversion apparatuses, and the power conversion apparatus 10 output balanced three-phase current to cancel the ripple current. For example, under a light load power demand, the system controller 90 can provide a plurality of system control signals S_{SYS1}, S_{SYS2}, S_{SYS3}, that is, the first system control signal S_{SYS1} controls the first power conversion apparatus 10-1 to only retain the power supply of the first single-phase AC-to-DC conversion unit 111 of the first three-phase power module 11, the second system control signal S_{SYS2} controls the second power conversion apparatus 10-2 to only retain the power supply of the second single-phase AC-to-DC conversion unit 112 of the second three-phase power module 12, and the third system control signal S_{SYS3} controls the third power conversion apparatus 10-3 to only retain the power supply of the third single-phase AC-to-DC conversion unit 113 of the third three-phase power module 13, thereby reducing the power supply of the power conversion apparatus 10 in response to a reduction in load power demand so that the power conversion apparatus 10 can output a balanced three-phase current to cancel the ripple current (i.e., the ripple component of the DC current).

Therefore, the power conversion apparatus and the power conversion system in the present disclosure has the following features and advantages:
1. Under the light load power demand, by disabling the three-phase power module(s) to reduce the power supply of the power conversion apparatus in response to the reduction of load power demand so that the power conversion apparatus can output a balanced three-phase current to cancel the ripple current.
2. Under the light load power demand, by interleavedly disabling the single-phase AC-to-DC conversion units to reduce the power supply of the power conversion apparatus in response to the reduction of load power demand so that the power conversion apparatus can output a balanced three-phase current to cancel the ripple current, and at the same time, the three-phase power supply on the grid side will not have the problem of uneven load extraction, thereby maintaining the power supply balance on the grid side.
3. By using the simple circuit design, the control of the low-frequency ripple current cancellation circuit is realized so that the system efficiency can be maintained even under extremely light load power demand, and the ripple component of the DC current can be cancelled so that the output current flowing to the load is a DC current without ripple components.
4. Multiple power conversion apparatuses are integrated and controlling through the system controller to achieve balanced output current in the cross-cabinet application field to maintain power supply balance on the grid side.

As will become apparent to the skilled person when studying the above disclosure, the subject-matter of the appended claims can also be combined in a different manner as specifically claimed. In particular the term "according to claim 1" and similar shall be deemed to encompass also the meaning "according to any of the preceding (antecedent) claims".

## Claims

1. A power conversion apparatus (10, 10-1, 10-2, 10-3), **characterized in that** the power conversion apparatus (10, 10-1, 10-2, 10-3) comprising:
a plurality of three-phase power modules (11-1N), each three-phase power module (11-1N) comprising:
three single-phase AC-to-DC conversion units (111, 112, 113) respectively configured to receive three AC voltages (V_{R}, V_{S}, V_{T}) of a three-phase AC power supply (V_{AC3}), and convert the three AC voltages (V_{R}, V_{S}, V_{T}) to provide a plurality of DC currents (i_{dc1}, i_{dc2}, i_{dc3}, ..., i_{dcN}),
a switch matrix (20) configured to receive the DC currents (i_{dc1}, i_{dc2}, i_{dc3}, ..., i_{dcN}) provided from the three-phase power modules (11-1N), and
a controller (30) configured to provide a switch control signal to control the switch matrix (20) to decide an output power (P_{OUT}) provided by the DC currents (i_{dc1}, i_{dc2}, i_{dc3}, ..., i_{dcN}).

2. The power conversion apparatus (10, 10-1, 10-2, 10-3) as claimed in claim 1, wherein the single-phase AC-to-DC conversion unit (111, 112, 113) comprises:
a rectifier (1111, 1121, 1131) configured to receive one AC voltage (V_{R}, V_{S}, V_{T}) of the three-phase AC power supply (V_{AC3}), and rectify the AC voltage (V_{R}, V_{S}, V_{T}) into a rectified voltage (V_{RR}, V_{SR}, V_{TR}), and
a single-stage isolated power converter (1112, 1122, 1132) configured to receive the rectified voltage (V_{RR}, V_{SR}, V_{TR}), and convert the rectified voltage (V_{RR}, V_{SR}, V_{TR}) into a conversion current (i_{Rdc}, i_{Sdc}, i_{Tdc}),
wherein the sum of the conversion currents (i_{Rdc}, i_{Sdc}, i_{Tdc}) of the single-phase AC-to-DC conversion units (111, 112, 113) is the DC current (i_{dc1}, i_{dc2}, i_{dc3}, ..., i_{dcN}).

3. The power conversion apparatus (10, 10-1, 10-2, 10-3) as claimed in claim 1, wherein the controller (30) is configured to provide at least one module control signal (S_{PM1}, S_{PM2}, S_{PM3}, ..., S_{PMN}) to disable at least one three-phase power module (11-1N) according to a reduction in a load power demand of a load supplied by the power conversion apparatus (10, 10-1, 10-2, 10-3).

4. The power conversion apparatus (10, 10-1, 10-2, 10-3) as claimed in claim 1, wherein the controller (30) is configured to provide at least one module control signal (S_{PM1}, S_{PM2}, S_{PM3}, ..., S_{PMN}) to disable at least one single-phase AC-to-DC conversion unit (111, 112, 113) of the three-phase power modules (11-1N) according to a reduction in a load power demand of a load supplied by the power conversion apparatus (10, 10-1, 10-2, 10-3).

5. The power conversion apparatus (10, 10-1, 10-2, 10-3) as claimed in claim 4, wherein the at least one single-phase AC-to-DC conversion unit (111, 112, 113) disabled of the three-phase power modules (11-1N) is configured to interleavedly receive the three AC voltages (V_{R}, V_{S}, V_{T}) of the three-phase AC power supply (V_{AC3}).

6. The power conversion apparatus (10, 10-1, 10-2, 10-3) as claimed in claim 1, wherein the controller (30) is configured to provide at least one module control signal (S_{PM1}, S_{PM2}, S_{PM3}, ..., S_{PMN}) to disable at least one three-phase power module (11-1N) and at least one single-phase AC-to-DC conversion unit (111, 112, 113) of the remaining three-phase power modules (11-1N) according to a reduction in a load power demand of a load supplied by the power conversion apparatus (10, 10-1, 10-2, 10-3).

7. The power conversion apparatus (10, 10-1, 10-2, 10-3) as claimed in claim 6, wherein the at least one single-phase AC-to-DC conversion unit (111, 112, 113) disabled of the three-phase power modules (11-1N) is configured to interleavedly receive the three AC voltages (V_{R}, V_{S}, V_{T}) of the three-phase AC power supply (V_{AC3}).

8. The power conversion apparatus (10, 10-1, 10-2, 10-3) as claimed in claim 1, further comprising:
a plurality of low-frequency ripple current cancellation circuits (41, 42, ..., 4N), the number of the low-frequency ripple current cancellation circuits (41, 42, ..., 4N) is equal to the number of the three-phase power modules (11-1N), and each low-frequency ripple current cancellation circuit (41, 42, ..., 4N) is correspondingly connected an output side of each three-phase power module (11-1N),
wherein each low-frequency ripple current cancellation circuit (41, 42, ..., 4N) comprises:
a first step-up circuit (411) comprising:
a first inductor (L₁), a first switch assembly (S₁), and a first capacitor (C₁), and
a second step-up circuit (412) connected to the first step-up circuit (411), and the second step-up circuit (412) comprising:
a second inductor (L₂), a second switch assembly (S₂), and a second capacitor (C₂),
wherein the low-frequency ripple current cancellation circuit (41, 42, ..., 4N) is configured to receive the DC current (i_{dc1}, i_{dc2}, i_{dc3}, ..., i_{dcN}) with a ripple component, and the ripple component is cancelled by the first step-up circuit (411) and the second step-up circuit (412).

9. A power conversion system, **characterized in that** the power conversion system comprising:
a plurality of power conversion apparatuses (10, 10-1, 10-2, 10-3), each power conversion apparatus (10, 10-1, 10-2, 10-3) comprising:
a plurality of three-phase power modules (11-1N), each three-phase power module (11-1N) comprising:
three single-phase AC-to-DC conversion units (111, 112, 113) respectively configured to receive three AC voltages (V_{R}, V_{S}, V_{T}) of a three-phase AC power supply (V_{AC3}), and convert the three AC voltages (V_{R}, Vs, V_{T}) into a plurality of DC currents (i_{dc1}, i_{dc2}, i_{dc3}, ..., i_{dcN}),
a switch matrix (20) configured to receive the DC currents (i_{dc1}, i_{dc2}, i_{dc3}, ..., i_{dcN}) provided from the three-phase power modules (11-1N), and
a controller (30) configured to provide a switch control signal to control the switch matrix (20) to decide an output power (P_{OUT}) provided by the DC currents (i_{dc1}, i_{dc2}, i_{dc3}, ..., i_{dcN}), and
a system controller (90) connected to the controllers (30) of the power conversion apparatuses (10, 10-1, 10-2, 10-3), and the system controller (90) configured to control the controllers (30) through communication to control the power conversion apparatuses (10, 10-1, 10-2, 10-3) to output balanced output powers (P_{OUT1}, P_{OUT2}, P_{OUT3}).

10. The power conversion system as claimed in claim 9, wherein each single-phase AC-to-DC conversion unit (111, 112, 113) comprises:
a rectifier (1111, 1121, 1131) configured to receive one AC voltage (V_{R}, V_{S}, V_{T}) of the three-phase AC power supply (V_{AC3}), and rectify the AC voltage (V_{R}, V_{S}, V_{T}) into a rectified voltage (V_{RR}, V_{SR}, V_{TR}), and
a single-stage isolated power converter (1112, 1122, 1132) configured to receive the rectified voltage (V_{RR}, V_{SR}, V_{TR}), and convert the rectified voltage (V_{RR}, V_{SR}, V_{TR}) into a conversion current (i_{Rdc}, i_{Sdc}, i_{Tdc}),
wherein the sum of the conversion currents (i_{Rdc}, i_{Sdc}, i_{Tdc}) of the single-phase AC-to-DC conversion units (111, 112, 113) is the DC current (i_{dc1}, i_{dc2}, i_{dc3}, ..., i_{dcN}).

11. The power conversion system as claimed in claim 9, wherein the controller (30) is configured to provide at least one module control signal (S_{PM1}, S_{PM2}, S_{PM3}, ..., S_{PMN}) to disable at least one three-phase power module (11-1N) according to a reduction in a load power demand of a load supplied by the power conversion apparatus (10, 10-1, 10-2, 10-3).

12. The power conversion system as claimed in claim 9, wherein the controller (30) is configured to provide at least one module control signal (S_{PM1}, S_{PM2}, S_{PM3}, ..., S_{PMN}) to disable at least one single-phase AC-to-DC conversion unit (111, 112, 113) of the three-phase power module (11-1N) according to a reduction in a load power demand of a load supplied by the power conversion apparatus (10, 10-1, 10-2, 10-3).

13. The power conversion system as claimed in claim 12, wherein the at least one single-phase AC-to-DC conversion unit (111, 112, 113) disabled of the three-phase power modules (11-1N) is configured to interleavedly receive the three AC voltages (V_{R}, V_{S}, V_{T}) of the three-phase AC power supply (V_{AC3}).

14. The power conversion system as claimed in claim 9, wherein the controller (30) is configured to provide at least one module control signal (S_{PM1}, S_{PM2}, S_{PM3}, ..., S_{PMN}) to disable at least one three-phase power module (11-1N) and at least one single-phase AC-to-DC conversion unit (111, 112, 113) of the remaining three-phase power modules (11-1N) according to a reduction in a load power demand of a load supplied by the power conversion apparatus (10, 10-1, 10-2, 10-3).

15. The power conversion system as claimed in claim 14, wherein the at least one single-phase AC-to-DC conversion unit (111, 112, 113) disabled of the three-phase power modules (11-1N) is configured to interleavedly receive the three AC voltages (V_{R}, V_{S}, V_{T}) of the three-phase AC power supply (V_{AC3}).
